(19) Europäisches Patentamt
European Patent Office
Office européen des brevets

(11) EP 1 387 542 A2

(12) **EUROPEAN PATENT APPLICATION**

(43) Date of publication:
**04.02.2004 Bulletin 2004/06**

(51) Int Cl.[7]: **H04L 27/26**

(21) Application number: **03016984.1**

(22) Date of filing: **25.07.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **29.07.2002 JP 2002220332**

(71) Applicant: **Panasonic Communications Co., Ltd.**
**Fukuoka-shi, Fukuoka 812-8531 (JP)**

(72) Inventors:
- **Noma, Nobuhiko**
  **Yokohama-shi, Kanagawa 227-0033 (JP)**
- **Imai, Tatsuo**
  **Chigasaki-shi, Kanagawa 253-0005 (JP)**
- **Tomita, Keiichi**
  **Yokohama-shi, Kanagawa 222-0032 (JP)**

(74) Representative: **Grünecker, Kinkeldey,**
**Stockmair & Schwanhäusser Anwaltssozietät**
**Maximilianstrasse 58**
**80538 München (DE)**

# (54) Symbol and hyperframe synchronisation in an ADSL modem

(57) An ADSL modem apparatus that serves as an ATU-R receives a signal in the hyperframe format having FEXT and NEXT parts, when an initialization sequence is started, the signal configured with a known number of symbols. The received signal is sampled by an AFE and stored in a buffer memory of an FFT unit. A processor establishes a symbol synchronization and a hyperframe synchronization, upon receiving an original signal, based on sample data of the original signal, the original signal having REVERB signals during a FEXT period and non-REVERB signals (distinguishable from REVERB signals) during a NEXT period.

Fig.7

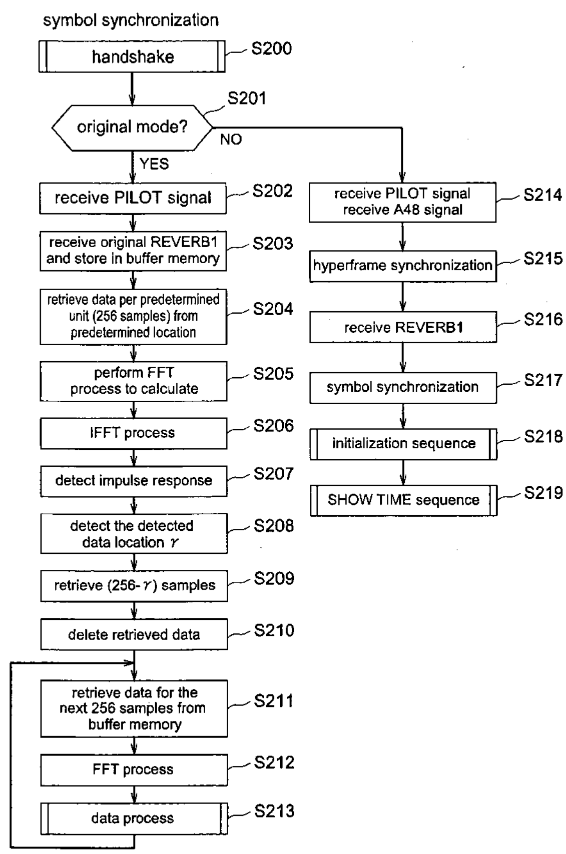


EP 1 387 542 A2

## Description

### BACKGROUND OF THE INVENTION

1. Field of the Invention

The present invention relates to an ADSL communication modem apparatus and a communication method for the ADSL communication modem apparatus that are regulated by G.992.1 (hereafter referred to as G.dmt) and G.992.2 (hereafter referred to as G.lite) recommended by the ITU-T.

2. Description of Related Art

In communication using ANNEX.C of G.dmt (ITU-T recommendation), a terminal side (ATU-R) receives a C-PILOT signal in order to establish a hyperframe synchronization. To be specific, a center side (ATU-C) transmits C-PILOT1 or C-PILOT1A (accompanied pilot) having carrier numbers 64 and 48, while the ATU-R analyzes the PILOT signal for establishing a hyperframe synchronization, in order to keep the synchronization shift at a frame front-end within one symbol.

Conventionally, the ATU-R performs a minor adjustment of the symbol synchronization (synchronization of physical layers), by analyzing a C-REVERB transmitted from the ATU-C. In particular, 256 samples are retrieved from a hyperframe configured with C-REVERB symbols, using an arbitrary symbol breakpoint. Then, an impulse response is found from the 256 samples. From a peak location of the impulse response, a symbol front-end is calculated in order to adjust the symbol synchronization.

However, the conventional method had the following problems. Since a symbol synchronization is established based on C-REVERB symbols after establishing a hyperframe synchronization based on a PILOT signal, an inefficient procedure has to be taken where the symbol synchronization is established at a physical layer lower than a logical layer, which has complicates the synchronization process. In other words, a complicated procedure has been taken because a rough symbol synchronization adjustment has to be made at first, by using a PILOT signal (carriers #48 and #64), which is time consuming but still requires repeating the same procedure.

Also, since the PILOT signals used is a combination of an A48 signal and a carrier #64, the synchronization procedure is not necessarily stable in some communication environment, which increases the chance of errors. Especially, when the distance between the ATU-C and the ATU-R is long, the potential of having errors is even more increased.

### SUMMARY OF THE INVENTION

The present invention addresses the above-described problems. The purpose of the invention is to provide an ADSL modem apparatus and a communication method for the ADSL modem apparatus that can securely establish hyperframe and symbol synchronizations at the same time, even when there is a long distance between the ATU-C and the ATU-R.

According to this invention, a symbol synchronization and a hyperframe synchronization are established, upon receiving an original signal, based on sample data of the original signal, the signal having REVERB signals during a FEXT period and non-REVERB signals (distinguishable from REVERB signals) during a NEXT period.

### BRIEF DESCRIPTION OF THE DRAWINGS

The present invention is further described in the detailed description which follows, with reference to the noted plurality of drawings by way of non-limiting examples of exemplary embodiments of the present invention, in which like reference numerals represent similar parts throughout the several views of the drawings, and wherein:

Fig. 1 illustrates a configuration of a communication system at a remote side, according to a first and second embodiment of the present invention;
Fig. 2 is a functional block diagram of a transceiver of Fig. 1;
Fig. 3 illustrates an initialization sequence based on G.dmt;
Fig. 4 illustrates an initialization sequence of an original mode, according to the first embodiment of the present invention;
Fig. 5 illustrates an allocation of FEXT and NEXT periods of a hyperframe;
Fig. 6 is a flowchart illustrating steps for transmitting an original REVERB in the original mode at a center side, according to the first embodiment of the present invention;
Fig. 7 is a flowchart illustrating a symbol synchronization and a hyperframe synchronization both in the original mode and in a normal mode at a remote side, according to the first embodiment of the present invention;
Fig. 8 is a detailed flowchart illustrating the data process of Fig. 7 in detail;
Fig. 9 illustrates a principle of the symbol synchronization;
Fig. 10 illustrates a situation where a symbol breakpoint is shifted;
Fig. 11 illustrates a relationship of a peak location of an impulse response and a shifted symbol breakpoint;
Fig. 12 illustrates a hyperframe configuration of an original PILOT according to the second embodiment of the present invention;
Fig. 13 illustrates carriers employed by REVERB and SEQUE symbols of the original PILOT signal;

Fig. 14 illustrates a hyperframe configuration of a normal C-PILOT signal;

Fig. 15 illustrates a carrier used by a normal C-PILOT signal;

Fig. 16 is a flowchart illustrating a symbol synchronization establishing process at the remote side, according to the second embodiment of the present invention; and

Fig. 17 is a flowchart illustrating a hyperframe synchronization establishing process at the remote side, according to the second embodiment of the present invention.

## DETAILED DESCRIPTION OF PREFERRED EMBODIMENTS

The embodiments of the present invention are explained in the following, in reference to the above-described drawings.

### First Embodiment

Fig. 1 illustrates a diagram of a communication system at the ATU-R side according to the present invention. In the communication system as illustrated in Fig. 1, a public phone line or a similar phone line (hereafter referred to as line) is connected to ADSL communication apparatus 2 via splitter 1. Further, user terminal 3 is connected to ADSL communication apparatus 2. When user terminal 3 and telephone 4 share one line, splitter 1 is necessary. However, when telephone 4 is not used, splitter 1 is not needed. It is also possible to have a configuration where user terminal 3 internally installs ADSL communication apparatus 2.

ADSL communication apparatus 2 includes transceiver 11 that executes a handshake sequence and an initialization sequence (which will be later-described), and host 12 that controls the entire operation including the one of transceiver 11.

At the line side of transceiver 11, units are configured with an analog circuit via an analog front end (hereafter referred to as AFE). Driver 15 is connected to a DA converter of AFE 13 via analog filter 14, so that analog signal amplified by driver 15 is transmitted to the line via hybrid 16.

The analog signal transmitted from the line is received by receiver 17 via hybrid 16, and then input into an AD converter of AFE 13 via analog filter 18. When sampling data is output from the AD converter, AFE 13 outputs the data to transceiver 11.

Fig. 2 is a functional block diagram illustrating transceiver 11. Processor 20 has a function to execute the handshake step and initialization step prior to initiating data transmission (SHOWTIME).

The transmission side of transceiver 11 includes Reed-Solomon encoder 21 that adds a redundancy bit for checking error, interleave unit 22 that sorts data to enable a burst error correction during Reed-Solomon decoding, Trellis encoder 23 that performs data convolution from a Trellis encoding, tone ordering unit 24 that lays out a bit number for each carrier, constellation encoder 25 that allocates topology of the transmission data on constellation coordinates, and IFFT unit 26 that performs an Inverse Fast Fourier Transform (hereafter referred to as IFFT) on data after the constellation encoding process.

The reception process side of transceiver 11 includes FFT unit 27 that performs a Fast Fourier Transform (hereafter referred to as FFT) on sampling data of the received signal, constellation decoder/FEQ unit 28 that decodes data from constellation data of the FFT output signal and corrects a topology on the constellation coordinates, tone de-ordering unit 29 that restores data laid out to each carrier after tone ordering process at the transmission side, Viterbi decoder 30 that performs Viterbi decoding on the received data, de-interleave unit 31 that restores data being resorted by the transmission side, and Reed-Solomon decoder 32 that deletes the redundancy bit added by the transmission side. Transceiver 11 is connected to host 12 via host interface (I/F) 34. RAM 33 is a work area of processor 20, which will be used for executing handshake and initialization sequences. Transceiver 11 is connected to host 12 via host interface (I/F) 34.

An ADSL modem apparatus at the center side is connected to ADSL modem apparatus 2 via a metallic cable. The ADSL modem apparatus at the center side has the same configuration as ADSL communication apparatus 2. Telephone 4 is not included when the center side is an exchange set by a communication industry.

The following explanation is made in detail, to illustrate the operation of the present embodiment having the above configuration. Especially, the operation during the initialization sequence is illustrated in detail.

The ATU-C and ATU-R determine contents for the initialization sequence (type of a standard or original sequence) by the handshake sequence based on G. 994.1. Using the determined content, the initialization sequence (original sequence or normal sequence, e.g., G.dmt or G.lite) is performed to establish a synchronization and to determine parameters such as communication speed. Thereafter, SHOWTIME (data communication) is executed using the determined parameters from the initialization sequence.

Fig. 3 is used to illustrate a normal initialization sequence based on G.dmt. The ATU-C transmits C-PILOT1 or C-PILOTIA using a hyperframe after C-QUIET2 (silent period). When there is R-REVERB1 response from the ATU-R, C-REVERB1, C-PILOT2, C-ECT, and C-REVREB2, which are preset signals, are transmitted in the order. When the ATU-R detects C-PILOT1 or C-PILOT1A during R-QUIET2 (silent period), a hyperframe synchronization is established during that time. Then, with the established synchronized hyperframe, R-REVERB1 is transmitted. After a silent period of R-QUIET3, R-ECT and R-REVERB2, which are preset signals, are transmitted in the order. The above describes an introductory part of a normal initialization sequence based on G.dmt.

In the present embodiment, an original sequence is provided where the hyperframe synchronization and symbol synchronization are established simultaneously, during the initialization sequence. Whether this original sequence is supported at the both side is checked during a handshake sequence.

In this original sequence, the ATU-C transmits an original REVERB (which will be later described) during a transmission period of C-REVERB1 or C-REVERB2. Based on the original REVERB signal, the ATU-R simultaneously establishes the hyperframe synchronization and symbol synchronization.

When an original sequence is executed, the ATU-R, after receiving the original REVERB, does not transmit R-REVERB1 until the symbol and hyperframe synchronizations are established. However, it is possible to arbitrarily set what kind of process is performed at the ATU-R based on a C-PILOT. The present invention does not limit the original REVERB transmission period within the C-REVERB1 transmission period. It can be during the C-REVERB2 or C-REVERB3 transmission period. For illustration purposes, the original REVERB transmission period is set during the C-REVERB1 transmission period in this embodiment.

Fig. 4 is a sequence chart illustrating an introductory part of the original initialization sequence based on G.dmt. In the present embodiment, after C-QUIET2 (silent period), the ATU-C transmits a C-PILOT (C-PILOT1 or C-PILOT1A) using the hyperframe. Upon transmitting predetermined number of symbols, the ATU-C starts an original REVERB transmission. When R-REVERB1 is detected within a predetermined time period since the original REVERB transmission, C-PILOT2, C-ECT, and C-REVERB2, which are preset signals, are transmitted in the order. The ATU-R, on the other hand, does not execute a process for the hyperframe synchronization, even when the C-PILOT is received. Instead, the ATU-R executes the process for the symbol and hyperframe synchronizations only after the original REVERB is detected. The ATU-R transmits R-REVERB1 using the hyperframe after the symbol and hyperframe synchronizations with the ATU-C.

The following describes in detail the original REVERB transmitted during the C-REVERB1 period.

ANNEX.C (of G.dmt) specification employs a special method in consideration of communication environments where the TCM-ISDN is resident. The TCM-ISDN generates high frequency noises (ISDN noises) created by switching of the transmission and reception sides for time division multiplexing. Therefore, the hyperframe is divided into a FEXT period, where the effect of the ISDN noises is small, and a NEXT period, where the effect of the ISDN noises is great.

Fig. 5 illustrates a hyperframe configured with 345 symbols regulated by ANNEX.C in G.dmt. The hyperframe comprises 0-31 sub-frames, each having a FEXT period where FEXT symbols appear in sequence and a NEXT period where NEXT symbols appear in sequence.

The ATU-C starts a hyperframe transmission configured with FEXT and NEXT symbols from "Beginning of Hyperframe" illustrated in Fig. 3. As an original sequence, a C-REVERB is transmitted during the FEXT period, and a signal equivalent to C-SEGUE1 is transmitted during the NEXT period, during a period corresponding to the C-REVERB 1 transmission period. Accordingly, a signal that transmits C-REVERB symbols during the FEXT period and C-SEGUE symbols during the NEXT period is hereafter referred to as an original signal.

C-SEGUE is a signal having a topology that is simply inverted from that of C-REVERB. Therefore, the ATU-R can securely detect a switch from C-REVERB to C-SEGUE. In particular, by combining C-SEGUE and C-REVERB, it becomes easy to recognize FEXT and NEXT symbols, thereby decreasing the chance of missing the detection and/or recognition. In addition, the combination of C-SEGUE and C-REVERB makes it possible to establish a symbol synchronization even when the first retrieved 256 samples prior to the symbol synchronization are found at the borderline of REVERB and SEGUE symbols, since the impulse response has the peak at the location.

Furthermore, the "original REVERB" in the present invention is not limited to the combination of C-REBERB and C-SEGUE. As long as the ATU-R can distinguish from C-REVERB, a signal other than C-SEGUE can be employed in order to obtain the same effect. However, it is preferable to employ a signal that has the impulse response at the borderline with a REVERB symbol as described above, even when the signal other than the SEGUE signal is combined.

As illustrated in Fig. 5, the hyperframe is configured with 0 - 31 sub-frames, only the 13$^{th}$ and 22$^{nd}$ sub-frames having 5 FEXT symbols in sequence. In this embodiment, when the last FEXT symbol (421$^{st}$ symbol) in the 22$^{nd}$ sub-frame is recognized, the reception symbols are thereafter counted up to the 344$^{th}$ symbols. Then, the beginning of the next symbol is recognized as the hyperframe front-end, in order to establish the hyperframe synchronization.

The following illustrates a process that establishes the symbol and hyperframe synchronizations in a sequential procedure at the remote side, based on the original REVERB, during the original initialization sequence.

Fig. 6 is a flowchart illustrating the original REVERB transmission from the ATU-C at the center side, during the original initialization sequence. The ATU-C executes a handshake sequence with the ATU-R (step S100) and determines whether the original mode can be executed during the initialization sequence (step S101). For example, a mode select signal is transmitted from the remote side to the center side. When the center side supports the original mode, the center side transmits ACK in order to confirm the use of the original mode as an initialization sequence.

When the original mode is not supported, a normal sequence in accordance with G.dmt or the like is selected and executed (step S102). When a normal G.dmt is selected, a sequence shown in Fig. 3 is executed.

When the original mode is selected during the handshake sequence, a predetermined number of C-PILOT symbols are transmitted after C-QUIET2 (step S103). By performing the process from step S104 to step S108, the original REVERB is generated and transmitted. In particular, during the FEXT period of the hyperframe of Fig. 3, a predetermined number of C-REVERB symbols (4-5 symbols) are sequentially transmitted (steps S104 and S105). During the NEXT period, a predetermined number of C-SEGUE symbols (6-7 symbols) are sequentially transmitted (steps S106 and S107). Then, it is determined whether more than a preset number of C-REVERB1 symbols (in this example, 512 symbols) are transmitted (step S108). If the preset number of C-REVERB1 symbols are transmitted, a transmission of C-PILOT2 is initiated (step S109). The following procedure is the same as the normal G.dmt sequence.

The embodiment adheres to the following arithmetic operation that is preset by G.dmt in order to determine whether the transmission symbol is FEXT or NEXT symbol.

$$S = 272 \times N_{dmt} \bmod 2760$$

Upon calculating the above operation, and when (S + 271)<a or S>d, the transmission symbols is detected to be a FEXT symbol. When S>b and S<c, it is detected to be a NEXT symbol.

In the above operation, $N_{dmt}$ = symbol number in the hyperframe, a=1243, b=1403, c=2613, and d=2704.

Fig. 7 is a flowchart illustrating the original initialization sequence and the normal initialization sequence at the ATU-R of the remote side. By performing a handshake sequence (step S200), it is determined whether the original mode can be employed during the initialization sequence (step S201).

When the original mode is selected at step S201, the control moves to step S202. Although the ATU-C transmits a C-PILOT as described above, the hyperframe synchronization based on the C-PILOT is not established at step S202.

Upon receiving the original REVERB transmitted from ATU-C, sampling data for one symbol is stored in buffer memory 27a of FFT unit 27, and an FFT is performed (steps 203, S204, and S205). Although a calculation is performed for the sampling data for one symbol at this FFT process, it is very likely that the sampling data is not from one exclusive symbol from the FEXT or NEXT symbol illustrated in Fig. 5, because a symbol synchronization has not been established. For example, it is likely that the data is 256 samples lying astride the $N^{th}$ and $(N+1)^{th}$ symbols in Fig. 5.

Processor 20 performs an IFFT on the FFT output of the 256 samples (step S206), and detects an impulse response (step S207).

Figs. 10 and 11 are used to illustrate a principle of establishing a symbol synchronization from the impulse response. When x(t) is a signal of one symbol (256 samples) at the transmission side, and y(t) is a signal of the 256 samples retrieved with a symbol breakpoint that is shifted with amount "a" at the reception side, the following relationship of x(t) and y(t) can be demonstrated using the shifted amount "a".

$$y(t) = x(t-a) \cdot h(t) \quad (1)$$

h(t): transfer function

When the operation (1) expressed with a time base is converted into a frequency base by an FFT, the following operation can be provided.

$$Y(\omega) = X(\omega)\, e^{-ja}\omega \cdot H(\omega)$$

$$Y(\omega)/X(\omega) = e^{-ja}\omega \cdot H(\omega) \quad (2)$$

When the operation (2) expressed with the frequency base is converted into a time base by IFFT, the following operation can be provided.

$$y(t)/x(t) = h(t-a) \quad (3)$$

Operation (3) illustrates that the peak location of the impulse response appears at the location with shifting amount "a". Fig. 11 (a) and (b) are waveform chart illustrating operation (3). As shown in the figure, the peak of the impulse response appears at the location with shifting amount "a". Therefore, the peak location appears at a symbol boundary.

Processor 20 obtains an impulse response from the above-described calculation, and calculates a number of samples from the beginning of the currently retrieved sample data to the peak location (number of samples: r). Then, (256 - r) is set as a discarded number of samples, which is instructed to FFT unit 27. FFT unit 27 discards the instructed samples (256-r) from buffer memory 27a, and sets the following sample (from the discarded ones) as the first sample of the next 256 sample retrieval. At every 256 samples from the first sample, one symbol is retrieved. From the beginning of a NEXT symbol (SEGUE (4)) shown in Fig. 9, a symbol is retrieved per 256 samples. Therefore, the actual reception symbol breakpoint and the preset symbol breakpoint match, i.e., a symbol synchronization is established. Fig. 9 illustrates an excerpt of the $1^{st}$ sub-frame portion from the hyperframe, illustrating from the $3^{rd}$ symbol of a FEXT symbol to the sixth symbol of a NEXT symbol.

Accordingly, step S208 of Fig. 7 determines where the peak location of the impulse response appears within the 256 samples retrieved at step S204. If it is at the $r^{th}$ sample, (256 - r) samples are retrieved from the buffer memory and deleted (steps S209 and S210). As a result, the first sample remaining in the buffer memory becomes the $1^{st}$ sample of the $5^{th}$ symbol (SEGUE, NEXT symbol) illustrated in Fig. 9. Therefore, by retrieving 256 samples from the first sample remaining in the buffer memory (step S211), the $5^{th}$ symbol can be retrieved in a state where the symbol synchronization is established.

Accordingly, upon establishing a symbol synchronization as described above, processor 20 performs an FFT at every 256 samples (step S212) and executes a data process in order to establish the hyperframe synchronization (S213).

Fig. 8 is a flowchart illustrating a detailed data process at step S213. During the data process, it is determined whether a symbol is a REVERB symbol judging from constellation data to be converted by the FFT. For example, when the symbol synchronization is established at the $5^{th}$ symbol of the hyperframe as shown in Fig. 9, the following 5 consecutive symbols are determined not to be REVERB symbols up to the $10^{th}$ symbol. The $11^{th}$ symbol is first determined to be a REVERB symbol. The following symbols up to the $14^{th}$ symbol are determined to be REVERB symbols. During step S301, a number of symbols that are determined to be REVERB symbols are counted. Then, it is determined whether 5 REVERB symbols are detected (step S302). When a SEGUE symbol is detected before detecting 5 consecutive REVERB symbols, the counted REVERB symbol number is reset. Accordingly, the process from step S300 to step S302 locates 5 consecutive REVERB symbols.

As shown in Fig. 5, 5 consecutive FEXT (= REVERB) symbols are found in the $13^{th}$ sub-frame and the $22^{nd}$ sub-frame. Therefore, the REVERB symbol counter values continue to be reset between the $0^{th}$ sub-frame and the $12^{th}$ sub-frame. At the 13th sub-frame, the determination is "YES" for the first time at step S302. When it is determined to be "YES" at step S302, the counter is incremented. Then, it is determined whether the counter value is 2 (step S303). In other words, the last FEXT symbol of the 5 consecutive FEXT (REVERB) symbols at the $22^{nd}$ sub-frame is detected by repeating the process from steps S300 to S303. As shown in Fig. 5, when the $241^{st}$ symbol within the $22^{nd}$ sub-frame is detected, the counter is incremented to "2" at step S303. Then, the control moves from step S303 to step S304.

At step S304, a predetermined number of symbols are counted from the symbol following the last FEXT symbol ($241^{st}$ symbol) of the 5 consecutive FEXT symbols of the $22^{nd}$ sub-frame. In this embodiment, the predetermined number of symbols signifies the number of symbols counted from the $241^{st}$ symbol to the last symbol of the hyperframe (the $344^{th}$ symbol), which is 102.

When the symbol counter value reaches the predetermined number at step S304, the symbol counter number is reset (step S305) and the next symbol becomes $0^{th}$ symbol for the symbol counter (step S306). As a result, the hyperframe synchronization is also established. In this embodiment, prior to terminating the process, the same process is repeated in order to improve the reliability (step S307).

When it is determined that a normal mode is used instead of the original mode at step S201, the control moves to step S214 to execute a standard initialization sequence. In particular, upon receiving a PILOT signal (step S214), a hyperframe synchronization is established from the received PILOT signal (step S215) and R-REVERB1 is transmitted as a response. Upon receiving C-REVERB1 (step S216), a symbol synchronization is established based on the C-REVERB1 (step S217) and the remaining initialization sequence is executed (step S218). When the initialization sequence is completed, the data transmission (SHOWTIME) is initiated (step S219).

In the original sequence, since the synchronization is established based on the C-REVERB, in stead of in response to the C-PILOT, it is possible to simultaneously establish both symbol and hyperframe synchronizations, which reduces redundancy in the synchronization establishment and simplifies the process.

Further, a REVERB signal is configured with a plurality of carriers #32 through #127 (or through #255), some of which including low frequency carriers. Therefore, even if carriers with high frequencies do not reach the opposing apparatus, it is possible to establish a stable synchronization by using carriers with low frequencies, thereby reducing errors and improving the reliability.

Furthermore, a REVERB signal is used during a FEXT period, as an original REVERB, and a SEGUE signal is used during a NEXT period, which makes it easy to distinguish between FEXT and NEXT symbols and improves the accuracy of detecting a FEXT (REVERB) symbol.

## Second Embodiment

The above embodiment illustrated a process where the symbol and hyperframe synchronizations are established using C-REVERB1 or C-REVERB2. However, in the second embodiment, the symbol and hyperframe synchronizations are established using an original PILOT instead of a C-PILOT.

Fig. 12 illustrates a hyperframe configuration of the original PILOT. As shown in Fig. 12, REVERB symbols are transmitted within a FEXT period, while SEGUE symbols are transmitted within a NEXT period during the original PILOT transmission. From the 3rd sub-frame, no signal is transmitted. Fig. 13 (a) illustrates frequencies (carriers) used for a REVERB signal of Fig. 12, while Fig. 13 (b) illustrates frequencies (carriers) used for a SEGUE signal of Fig. 12. As illustrated in Figs. 14 and 15, a C-PILOT signal is conventionally transmitted using carrier #48. However, in the present embodiment, a plurality of carriers from #32 - #63 are used.

In this embodiment, the communication system has the same configuration as the first embodiment. Therefore, parts having the same numerical characters as in the first embodiment represent the same configurations.

The ATU-C and ATU-R initialize in accordance with the sequence of Fig. 3. However, in the original mode, the ATU-C transmits the original PIILOT as in Fig. 12, instead of C-PILOT1 or C-PILOT1A. Upon receiving the original PILOT, the ATU-R establishes the symbol and hyperframe synchronizations.

Fig. 16 is a flowchart illustrating a synchronization establishment during the initialization sequence using the original mode, at the ATU-R side. In this example, an original mode is selected during the handshake sequence with the ATU-C. Then, the ATU-C transmits the original PILOT of Fig. 12.

Upon confirming an initialization using the original mode during the handshake sequence, and detecting a signal energy, the ATU-R determines that the original PILOT is received (step S400). By storing sample data of the original PILOT in buffer memory 27a, 256 samples are retrieved using an arbitrary symbol breakpoint (step S401). Similarly to the first embodiment, an impulse response is detected (step S402) in order to establish a symbol synchronization (step S403).

Accordingly, a symbol synchronization can be established based on an impulse response having a peak in a boundary between REVERB symbols or SEGUE symbols within the 1st sub-frame (as in Fig. 12), or between REVERB and SEGUE symbols (as in Fig. 9).

When the symbol synchronization is established, 256 sample data for the next symbol is retrieved from buffer memory 27a (step S404). Then, data is processed in order to establish a hyperframe synchronization (step S405).

Fig. 17 is a flowchart illustrating the process of step S405. As illustrated in Fig. 17, an FFT is performed on sample data for one symbol in order to obtain constellation data for each carrier (step S501). Then, it is determined whether the symbol is a REVERB or SEGUE symbol (step S502). Subsequently, boundaries from a REVERB to a SEGUE symbol in the 1st and 2nd sub-frames of the hyperframe are detected (step S503).

As described above, the original PILOT uses REVERB and SEGUE symbols only in the 1st and 2nd sub-frames of the hyperframe. Therefore, based on the detected boundary from a REVERB to a SEGUE symbols in the 2nd sub-frame, it is possible to establish a hyperframe synchronization.

It is determined whether a SEGUE symbol is detected, after registering symbol type at step S502 and registering consecutive REVERB symbols at step S503. Until such boundary is detected, the control moves to step S404 in order to repeat retrieving symbols (of 256 samples).

When the boundary is detected twice (step S504), a boundary between the 14th symbol (REVERB) and the 15th symbol (SEGUE) within the 2nd sub-frame is recognized (step S505). Thereafter, data per 256 samples (one symbol unit) is retrieved, and the symbol number counter is incremented (step S506). This 256 sample unit data retrieval and counter incrementing is repeated until the number of symbols reaches 299 (step S507). The hyperframe has 299 symbols from the 15th symbol to the 344th symbol, which is the very last symbol of the hyperframe. Accordingly, the 300th symbol becomes the front-end of the hyperframe. In this embodiment, the 300th symbol is recognized to be the hyperframe front-end, which establishes the hyperframe synchronization (step S708).

Therefore, according to this embodiment, an original PILOT signal is generated having REVERB symbols inserted in FEXT periods and SEGUE symbols inserted in a NEXT periods within the 1st and 2nd sub-frames of the hyperframe. Therefore, the remote side can simultaneously establish symbol and hyperframe synchronizations.

The above illustration has used only the 1st and 2nd sub-frames. However, it is possible to further improve the reliability when three or more sub-frames, including the third sub-frame, are used. In addition, even when only the 1st sub-frame is used, it is possible to establish a hyperframe synchronization by detecting a boundary between a REVERB and a SEGUE, and by counting up to the last symbol within the hyperframe.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above-described embodiments, and various variations and modifications may be possible without departing from the scope of the present invention.

This application is based on the Japanese Patent Application No. 2002-220332 filed on July 29, 2002, entire content of which is expressly incorporated by reference herein.

## Claims

1. An ADSL modem apparatus comprising:

    a receiver that receives a signal, when an initialization sequence is started, in a hyperframe format having FEXT and NEXT parts, the signal configured with a known number of symbols;
    a sampling unit that samples the signal received by said receiver and outputs sample data; and
    a controller that establishes a symbol synchronization and a hyperframe synchronization, upon receiving an original signal, based on sample data of the original signal, the original signal having a REVERB signal inserted in the FEXT part and a non-REVERB signal inserted in the NEXT part, the non-REVERB signal being distinguishable from the REVERB signal.

2. The ADSL modem apparatus according to claim 1, wherein, the original signal uses a SEGUE signal during the NEXT part as the non-REVERB signal, the SEGUE signal having a topology inverted from that of the REVERB signal.

3. The ADSL modem apparatus according to claim 1, wherein said controller performs a Fourier transform using a number of samples that amounts to one symbol, detects an impulse response by performing an inverse Fourier transform on a result of the Fourier transform, the impulse response showing a shift from an actual symbol location to a retrieval location of the sample data, and locates a symbol front-end from a detected location of the impulse response.

4. The ADSL modem apparatus according to claim 3, wherein said controller calculates a number of samples r from a beginning of the sample data for one symbol to a peak location of the impulse response, deletes (N-r) samples from the beginning of the sample data when sample data of one symbol is retrieved, (N-r) being of a number of samples N for one symbol subtracted by the number r, and retrieves sample data by setting data following the deleted sample data as a beginning of the sample data, in order to establish a symbol synchronization.

5. The ADSL modem apparatus according to claim 1, wherein said controller counts a number of REVERB signals after a symbol synchronization is established, and establishes a hyperframe synchronization based on a result of the counted number of REVERB signals and a continuity of a FEXT part or a NEXT part within the hyperframe.

6. The ADSL modem apparatus according to claim 5, wherein said controller detects a portion where five consecutive REVERB signals are located, and specifies an ending position of the hyperframe by counting symbols from the detected portion.

7. The ADSL modem apparatus according to claim 1, wherein the original signal is received during a transmission period of one of C-REVERB1, C-REVERB2, and C-REVERB3.

8. The ADSL modem apparatus according to claim 1, wherein the original signal is received during a transmission period of a first PILOT signal at the initialization sequence.

9. The ADSL modem apparatus according to claim 8, wherein the original signal is inserted into one of a first sub-frame and a second sub-frame within the hyperframe of the PILOT signal.

10. An ADSL modem apparatus comprising:

    a transmitter that transmits a signal, when an initialization sequence is started, in a hyperframe format having FEXT and NEXT parts, the signal configured with a known number of symbols; and
    a controller that enables said transmitter to transmit an original signal during a transmission period of one of C-REVERB1, C-REVERB2, and C-REVERB3, the original signal having a REVERB signal inserted in the FEXT part and a non-REVERB signal inserted in the NEXT part, the non-REVERB signal being distinguishable from the REVERB signal.

11. An ADSL modem apparatus comprising:

    a transmitter that transmits a signal, when an initialization sequence is started, in a hyperframe format having FEXT and NEXT parts, the signal configured with a known number of symbols; and
    a controller that enables said transmitter to transmit an original signal only for several subframes from the beginning of the hyperframe during a transmission period of one of C-PILOT1 and C-PILOT1A, the original signal having a REVERB signal inserted in the FEXT part and a non-REVERB signal inserted in the NEXT part, the non-REVERB signal being distinguishable from the REVERB signal.

**12.** A communication method comprising:

receiving a signal, when an initialization sequence is started, in a hyperframe format having FEXT and NEXT parts, the signal configured with a known number of symbols;
sampling the received signal and outputs sample data; and
establishing a symbol synchronization and a hyperframe synchronization, upon receiving an original signal, based on sample data of the original signal, the original signal having a REVERB signal inserted in the FEXT part and a non-REVERB signal inserted in the NEXT part, the non-REVERB signal being distinguishable from the REVERB signal.

**13.** A communication method comprising:

transmitting a signal, when an initialization sequence is started, in a hyperframe format having FEXT and NEXT parts, the signal configured with a known number of symbols; and
transmitting an original signal during a transmission period of one of C-REVERB1, C-REVERB2, and C-REVERB3, the original signal having a REVERB signal inserted in the FEXT part and a non-REVERB signal inserted in the NEXT part, the non-REVERB signal being distinguishable from the REVERB signal.

**14.** A communication method comprising:

transmitting a signal, when an initialization sequence is started, in a hyperframe format having FEXT and NEXT parts, the signal configured with a known number of symbols; and
transmitting an original signal only for several sub-frames from the beginning of the hyperframe during a transmission period of one of C-PILOT1 and C-PILOT1A, the original signal having a REVERB signal inserted in the FEXT part and a non-REVERB signal inserted in the NEXT part, the non-REVERB signal being distinguishable from the REVERB signal.

Fig.1

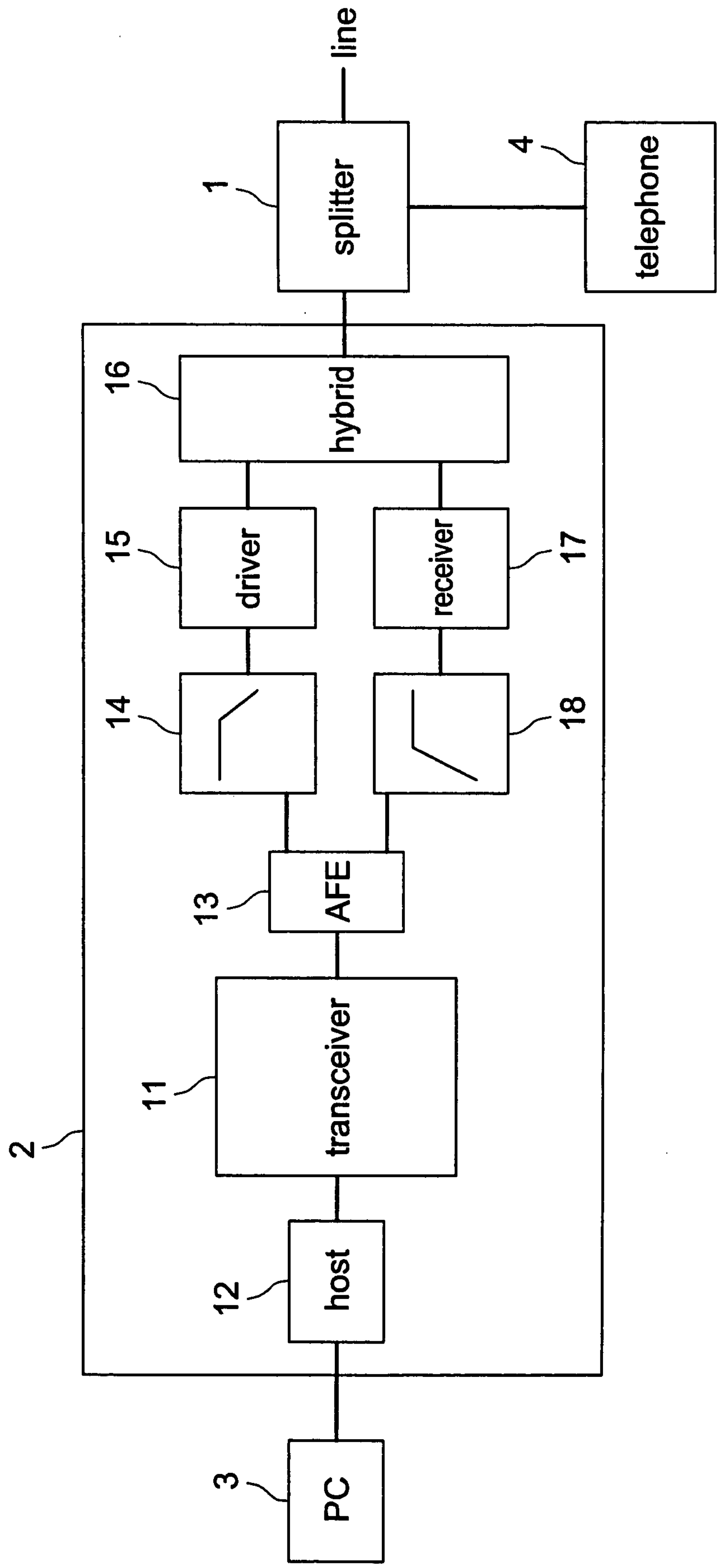
line
1
splitter
4
telephone
16
hybrid
15
driver
17
receiver
14
18
13
AFE
11
transceiver
2
12
host
3
PC

Fig.2

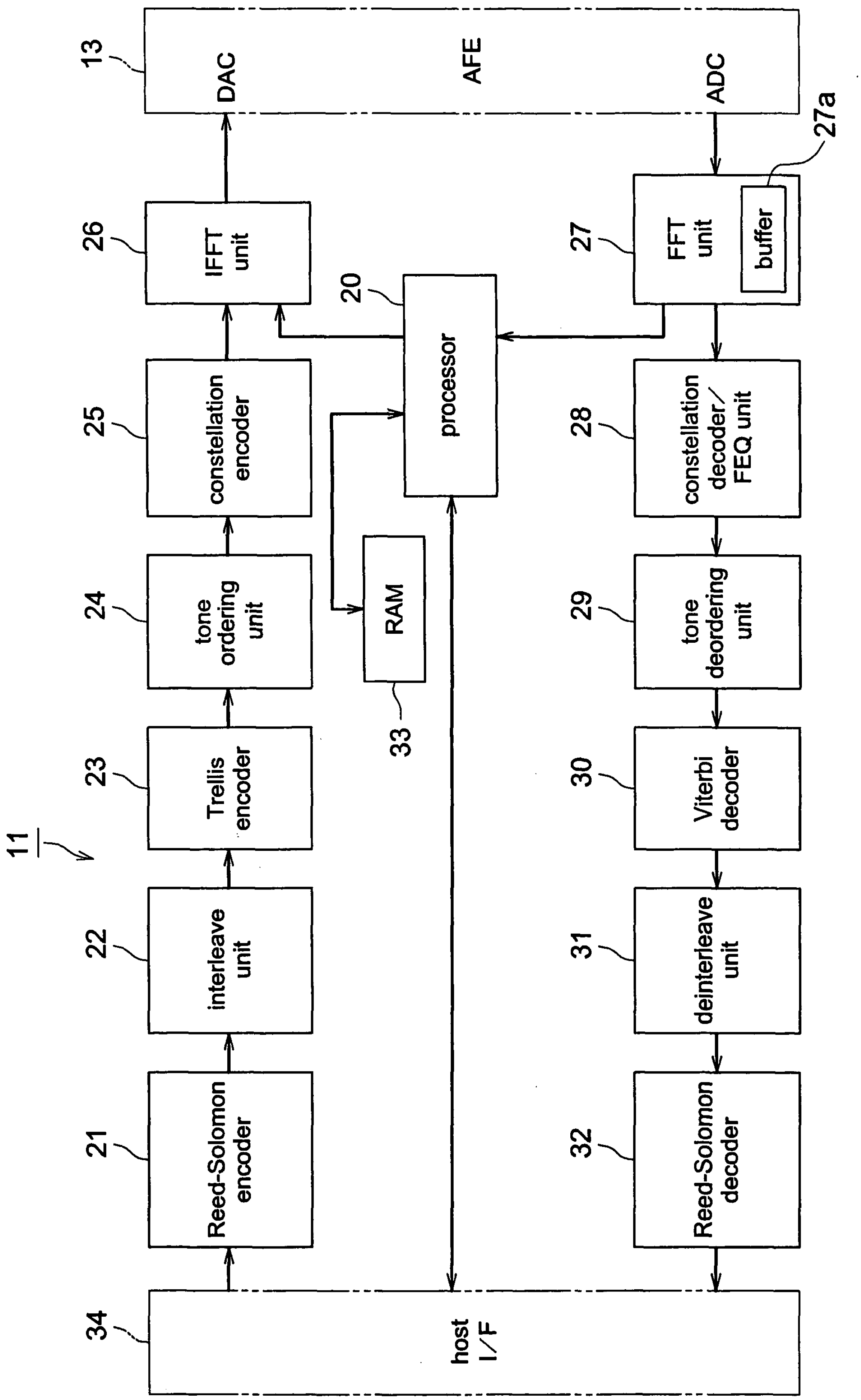
11
13
AFE
DAC
ADC
26
IFFT unit
27
FFT unit
buffer
27a
20
processor
25
constellation encoder
28
constellation decoder/ FEQ unit
24
tone ordering unit
29
tone deordering unit
RAM
33
23
Trellis encoder
30
Viterbi decoder
22
interleave unit
31
deinterleave unit
21
Reed-Solomon encoder
32
Reed-Solomon decoder
34
host I/F

Fig.3

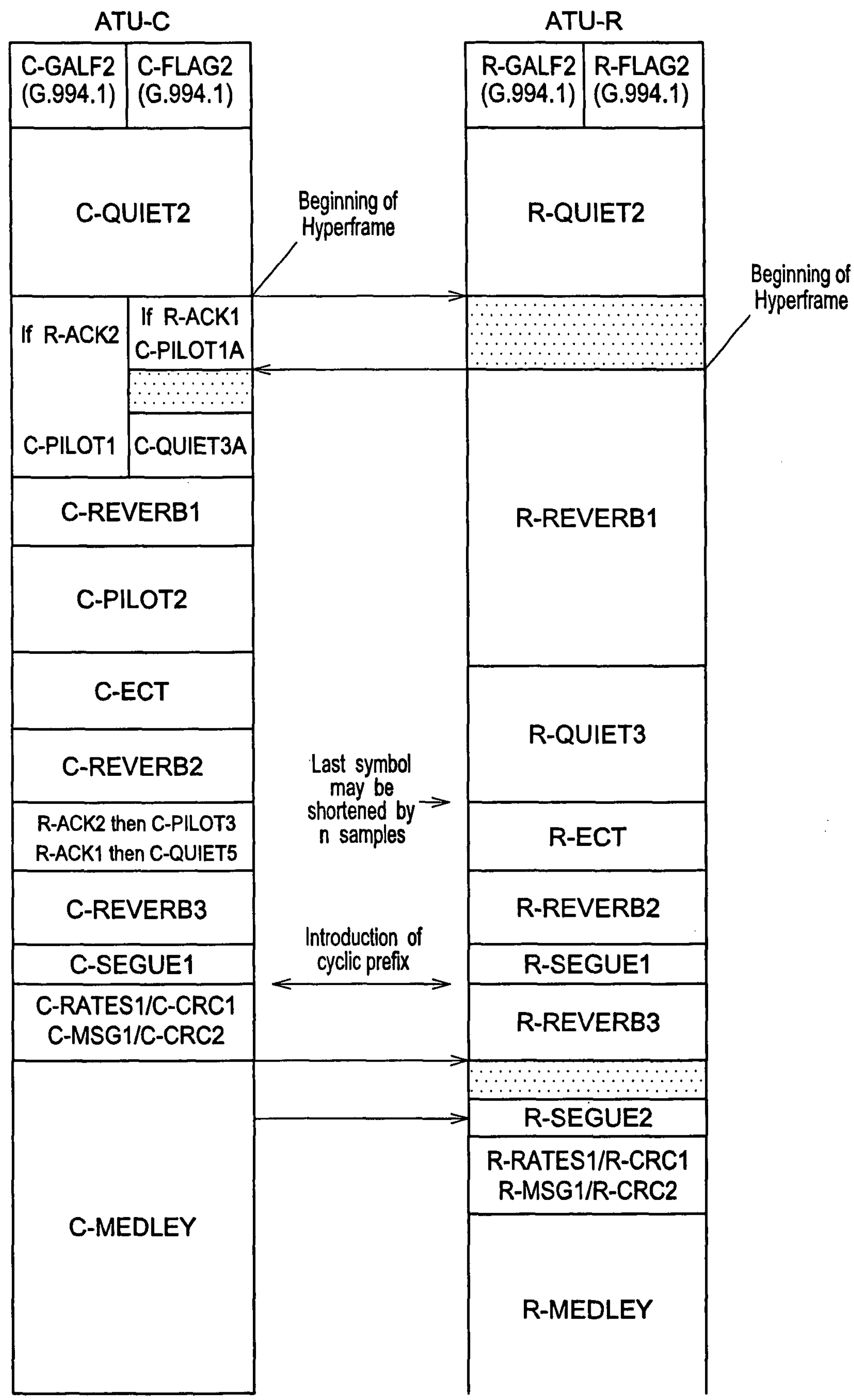
ATU-C
ATU-R
C-GALF2 (G.994.1)
C-FLAG2 (G.994.1)
R-GALF2 (G.994.1)
R-FLAG2 (G.994.1)
C-QUIET2
R-QUIET2
Beginning of Hyperframe
Beginning of Hyperframe
If R-ACK2
If R-ACK1
C-PILOT1A
C-PILOT1
C-QUIET3A
C-REVERB1
R-REVERB1
C-PILOT2
C-ECT
R-QUIET3
C-REVERB2
Last symbol may be shortened by n samples
R-ACK2 then C-PILOT3
R-ACK1 then C-QUIET5
R-ECT
C-REVERB3
R-REVERB2
Introduction of cyclic prefix
C-SEGUE1
R-SEGUE1
C-RATES1/C-CRC1
C-MSG1/C-CRC2
R-REVERB3
R-SEGUE2
R-RATES1/R-CRC1
R-MSG1/R-CRC2
C-MEDLEY
R-MEDLEY

# Fig.4

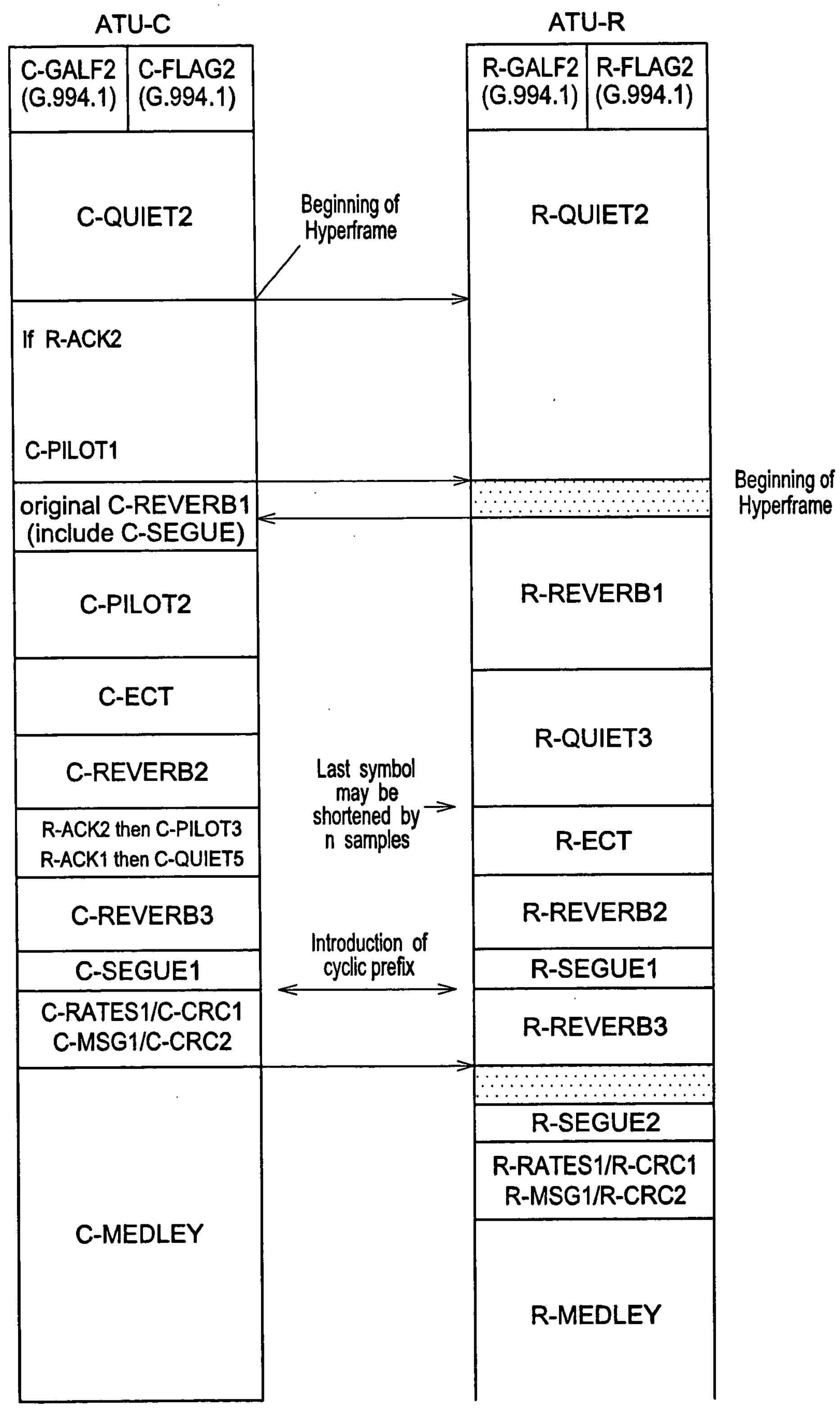
ATU-C
ATU-R
C-GALF2 (G.994.1)
C-FLAG2 (G.994.1)
R-GALF2 (G.994.1)
R-FLAG2 (G.994.1)
C-QUIET2
Beginning of Hyperframe
R-QUIET2
If R-ACK2
C-PILOT1
Beginning of Hyperframe
original C-REVERB1 (include C-SEGUE)
C-PILOT2
R-REVERB1
C-ECT
R-QUIET3
C-REVERB2
Last symbol may be shortened by n samples
R-ACK2 then C-PILOT3
R-ACK1 then C-QUIET5
R-ECT
C-REVERB3
R-REVERB2
Introduction of cyclic prefix
C-SEGUE1
R-SEGUE1
C-RATES1/C-CRC1
C-MSG1/C-CRC2
R-REVERB3
R-SEGUE2
R-RATES1/R-CRC1
R-MSG1/R-CRC2
C-MEDLEY
R-MEDLEY

# Fig.5

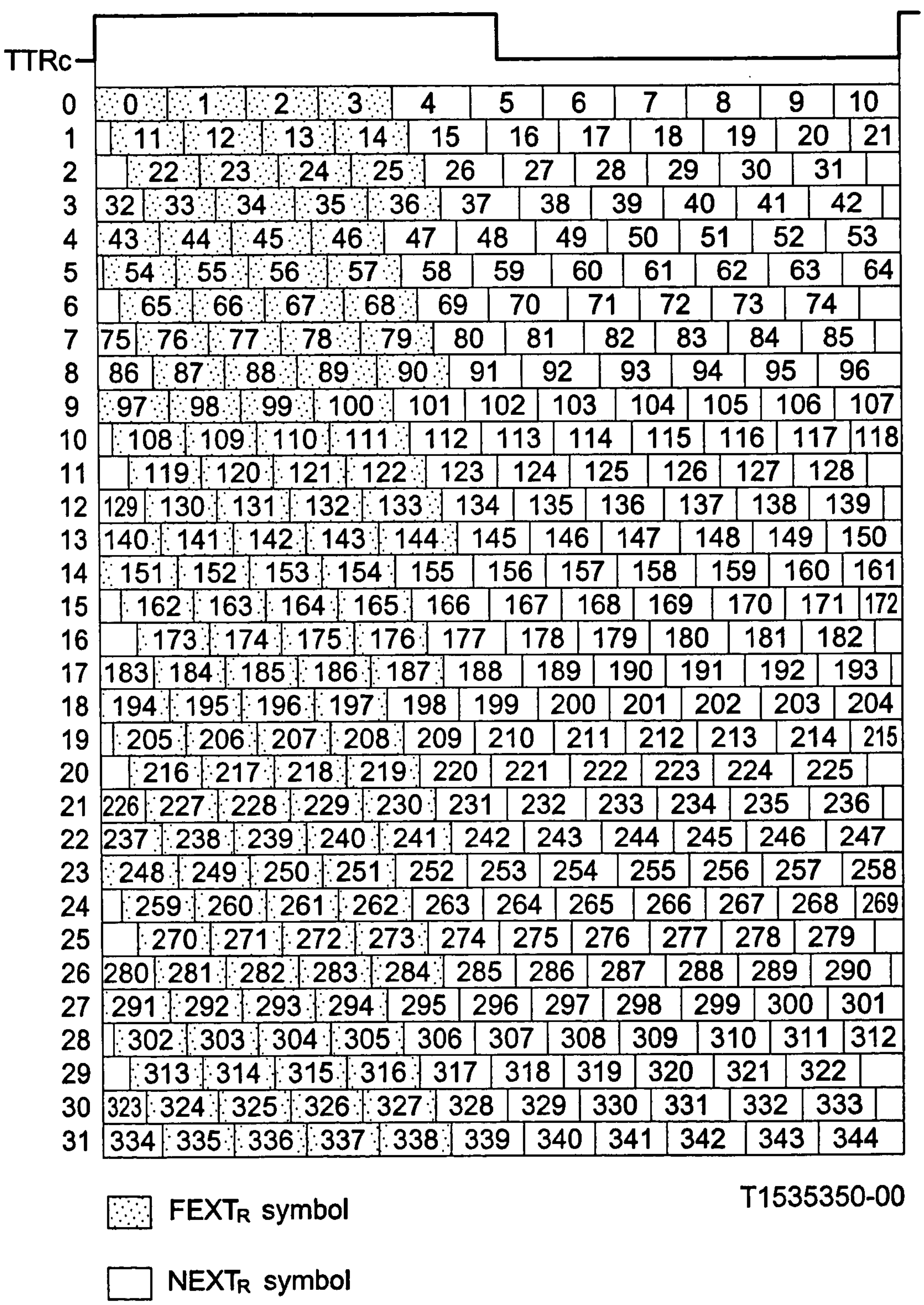
TTRc
0 0 1 2 3 4 5 6 7 8 9 10
1 11 12 13 14 15 16 17 18 19 20 21
2 22 23 24 25 26 27 28 29 30 31
3 32 33 34 35 36 37 38 39 40 41 42
4 43 44 45 46 47 48 49 50 51 52 53
5 54 55 56 57 58 59 60 61 62 63 64
6 65 66 67 68 69 70 71 72 73 74
7 75 76 77 78 79 80 81 82 83 84 85
8 86 87 88 89 90 91 92 93 94 95 96
9 97 98 99 100 101 102 103 104 105 106 107
10 108 109 110 111 112 113 114 115 116 117 118
11 119 120 121 122 123 124 125 126 127 128
12 129 130 131 132 133 134 135 136 137 138 139
13 140 141 142 143 144 145 146 147 148 149 150
14 151 152 153 154 155 156 157 158 159 160 161
15 162 163 164 165 166 167 168 169 170 171 172
16 173 174 175 176 177 178 179 180 181 182
17 183 184 185 186 187 188 189 190 191 192 193
18 194 195 196 197 198 199 200 201 202 203 204
19 205 206 207 208 209 210 211 212 213 214 215
20 216 217 218 219 220 221 222 223 224 225
21 226 227 228 229 230 231 232 233 234 235 236
22 237 238 239 240 241 242 243 244 245 246 247
23 248 249 250 251 252 253 254 255 256 257 258
24 259 260 261 262 263 264 265 266 267 268 269
25 270 271 272 273 274 275 276 277 278 279
26 280 281 282 283 284 285 286 287 288 289 290
27 291 292 293 294 295 296 297 298 299 300 301
28 302 303 304 305 306 307 308 309 310 311 312
29 313 314 315 316 317 318 319 320 321 322
30 323 324 325 326 327 328 329 330 331 332 333
31 334 335 336 337 338 339 340 341 342 343 344
T1535350-00
FEXTR symbol
NEXTR symbol

Fig.6

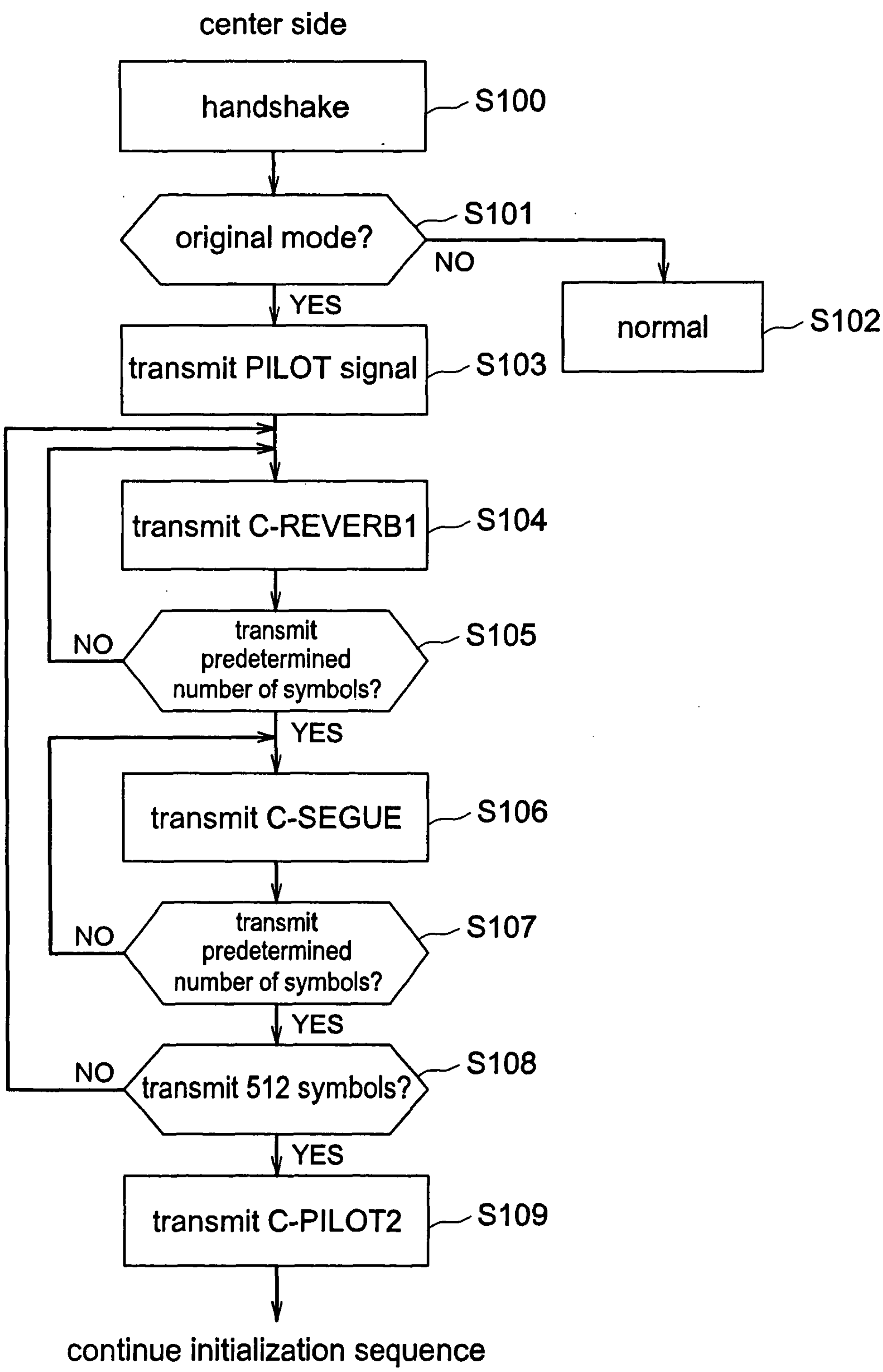
center side
handshake
S100
original mode?
S101
NO
YES
normal
S102
transmit PILOT signal
S103
transmit C-REVERB1
S104
transmit predetermined number of symbols?
S105
NO
YES
transmit C-SEGUE
S106
transmit predetermined number of symbols?
S107
NO
YES
transmit 512 symbols?
S108
NO
YES
transmit C-PILOT2
S109
continue initialization sequence

Fig.7

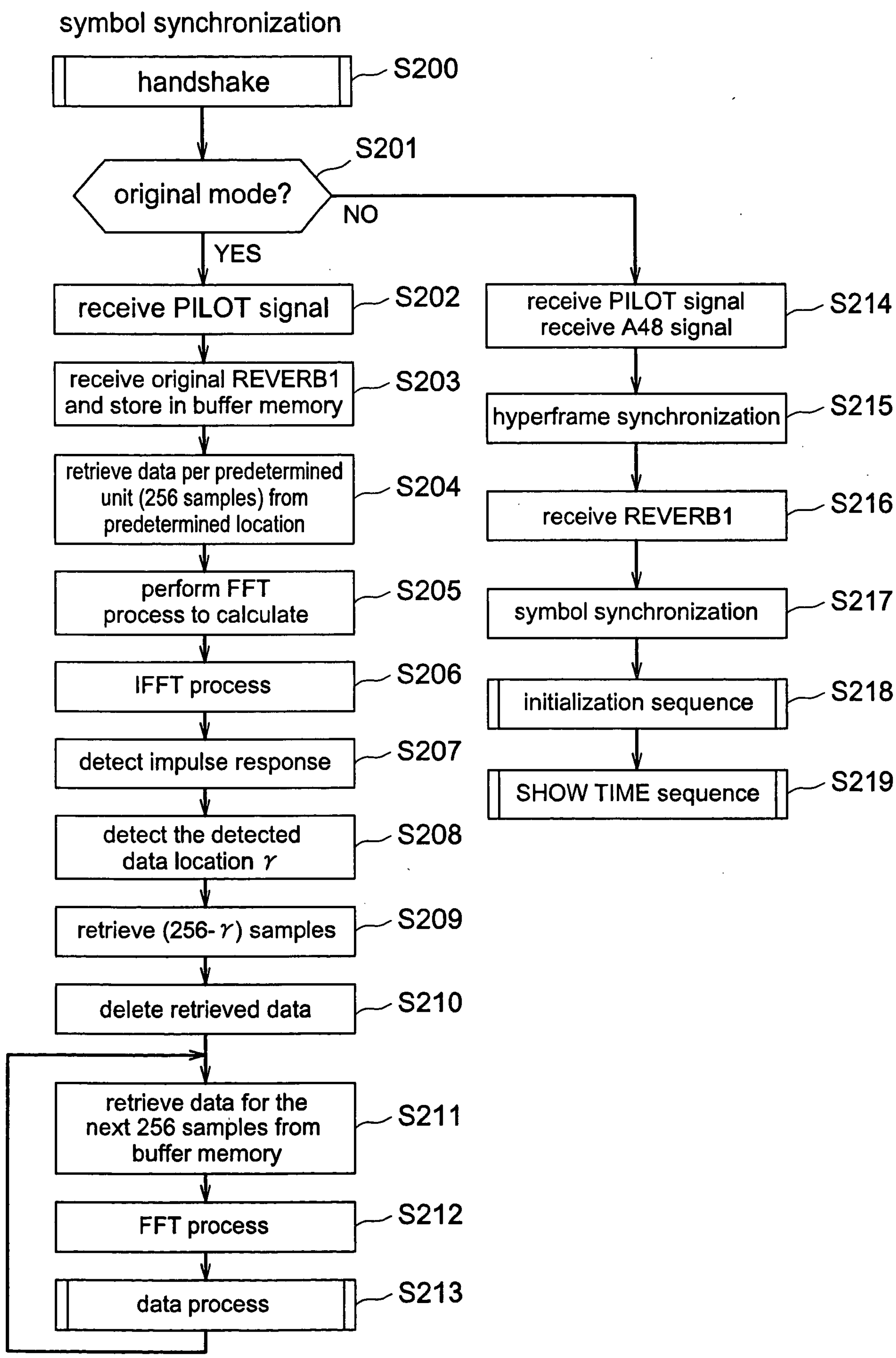
symbol synchronization
handshake
S200
original mode?
S201
NO
YES
receive PILOT signal
S202
receive original REVERB1 and store in buffer memory
S203
retrieve data per predetermined unit (256 samples) from predetermined location
S204
perform FFT process to calculate
S205
IFFT process
S206
detect impulse response
S207
detect the detected data location γ
S208
retrieve (256-γ) samples
S209
delete retrieved data
S210
retrieve data for the next 256 samples from buffer memory
S211
FFT process
S212
data process
S213
receive PILOT signal receive A48 signal
S214
hyperframe synchronization
S215
receive REVERB1
S216
symbol synchronization
S217
initialization sequence
S218
SHOW TIME sequence
S219

Fig.8

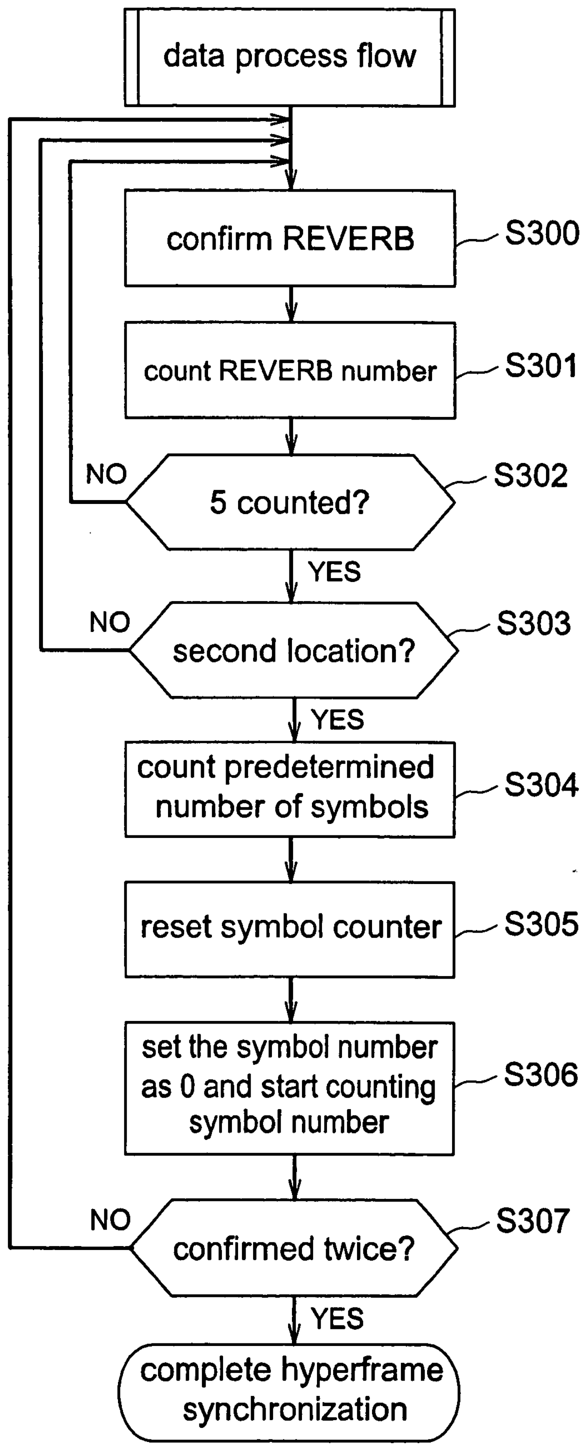
data process flow
confirm REVERB
S300
count REVERB number
S301
5 counted?
S302
NO
YES
second location?
S303
NO
YES
count predetermined number of symbols
S304
reset symbol counter
S305
set the symbol number as 0 and start counting symbol number
S306
confirmed twice?
S307
NO
YES
complete hyperframe synchronization

Fig.9

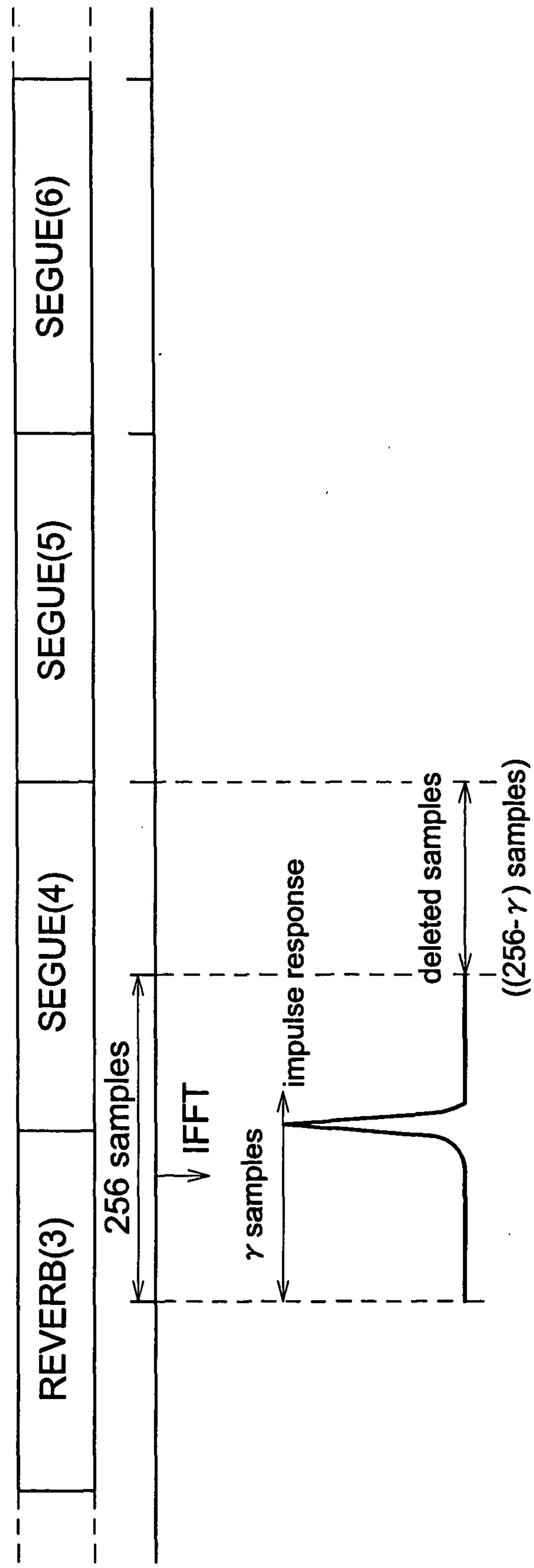

REVERB(3)
SEGUE(4)
SEGUE(5)
SEGUE(6)
256 samples
IFFT
γ samples
impulse response
deleted samples
((256-γ) samples)

Fig.10

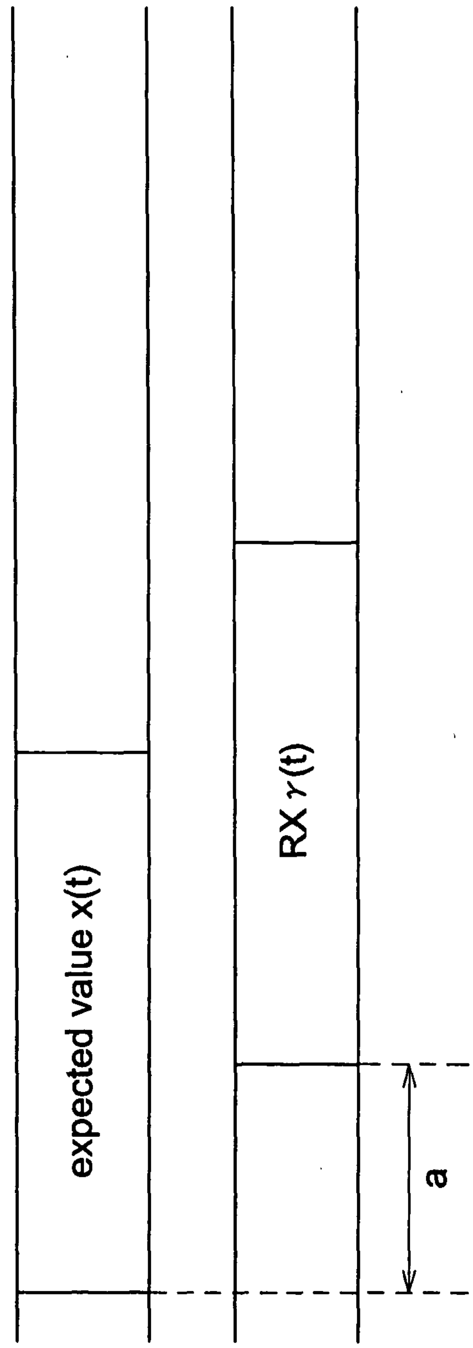

Fig.11 (a)

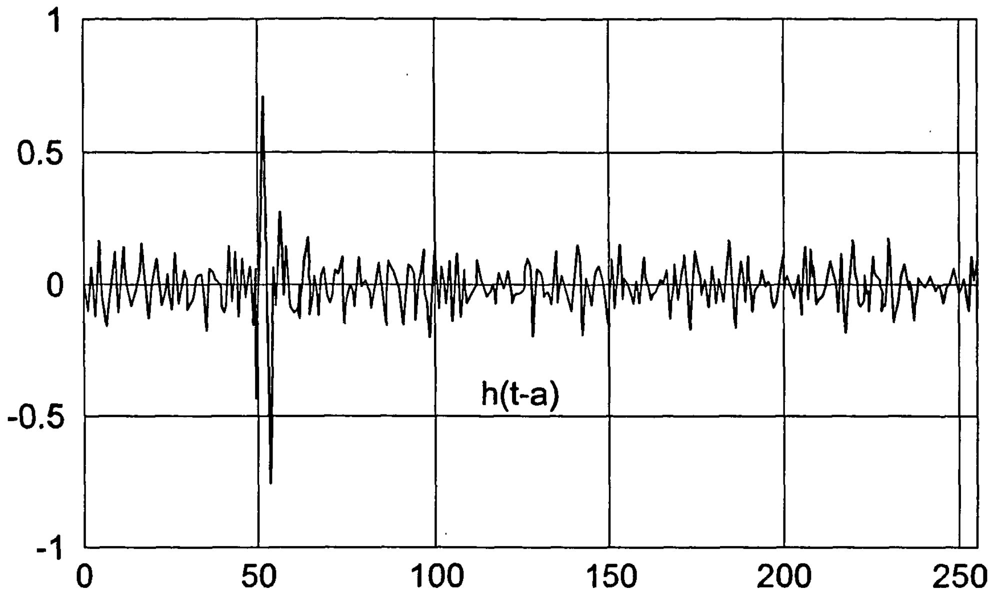


Fig.11 (b)

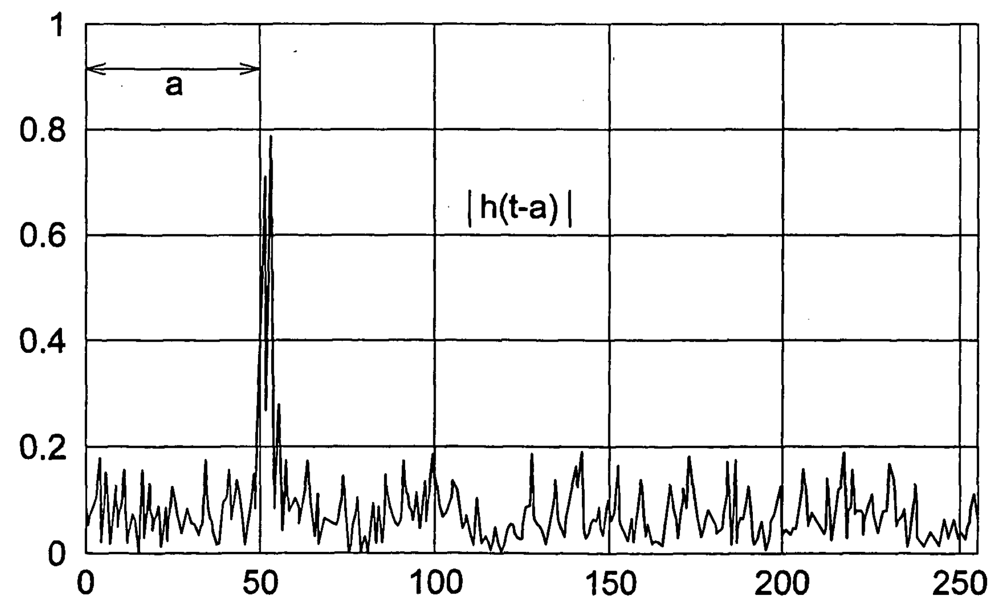

Fig.12

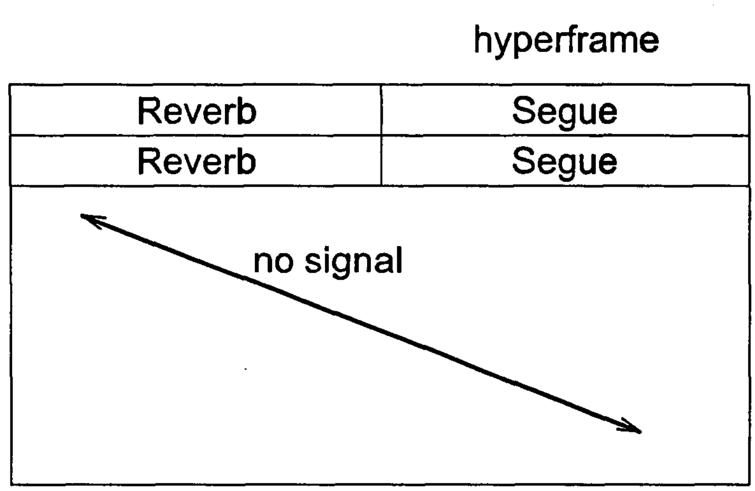

Fig.13 (a)

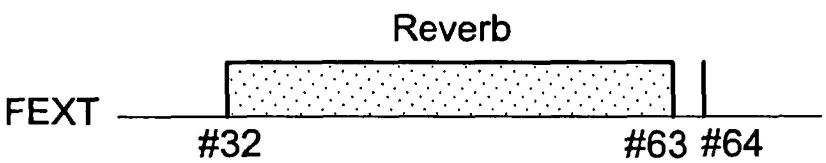


Fig.13 (b)

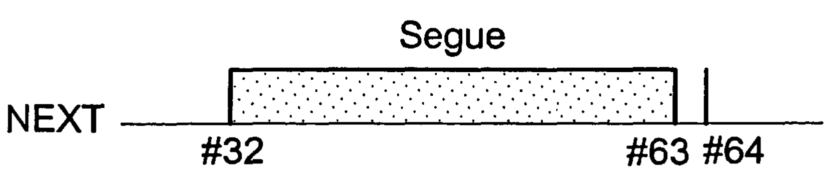

Fig.14

current standard

hyperframe

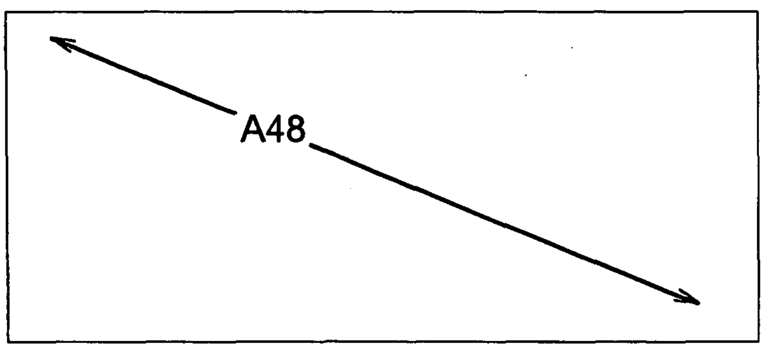

Fig.15

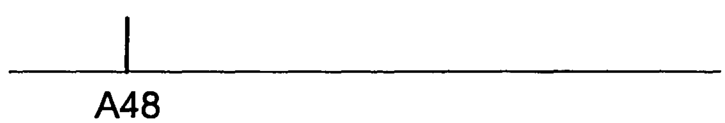

Fig.16

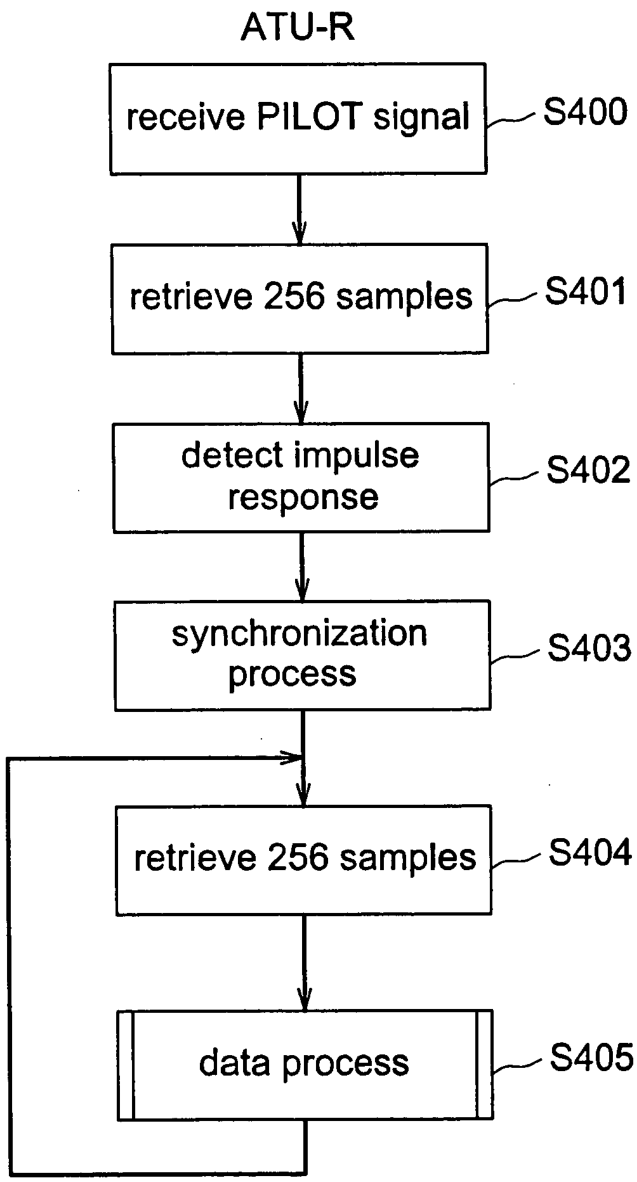
ATU-R
receive PILOT signal
S400
retrieve 256 samples
S401
detect impulse response
S402
synchronization process
S403
retrieve 256 samples
S404
data process
S405

Fig.17

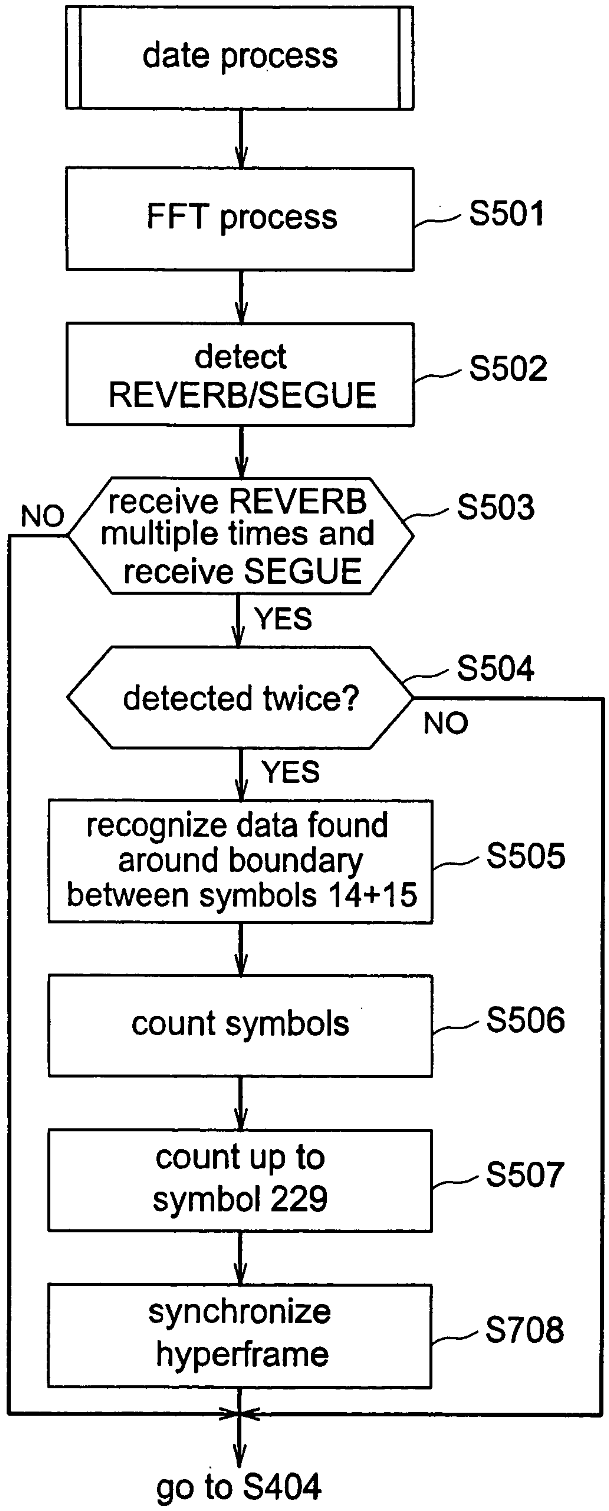
date process
FFT process
S501
detect REVERB/SEGUE
S502
receive REVERB multiple times and receive SEGUE
S503
NO
YES
detected twice?
S504
NO
YES
recognize data found around boundary between symbols 14+15
S505
count symbols
S506
count up to symbol 229
S507
synchronize hyperframe
S708
go to S404